# EUROPÄISCHE PATENTSCHRIFT

(11) **EP 2 700 281 B1**
(45) Veröffentlichungstag und Bekanntmachung des Hinweises auf die Patenterteilung: **31.12.2014**
(21) Anmeldenummer: 12720820.5
(22) Anmeldetag: 18.04.2012
(51) Int. Cl.: H04W 76/02

(54) **VERFAHREN ZUM LEITEN VON TELEKOMMUNIKATIONSVERBINDUNGEN ZU EINEM MOBILFUNK-ENDGERÄT SOWIE MOBILFUNK-GATEWAY**
METHOD FOR ROUTING TELECOMMUNICATIONS CONNECTIONS TO A MOBILE RADIO TERMINAL AND MOBILE RADIO GATEWAY
PROCÉDÉ POUR AIGUILLER DES LIAISONS DE TÉLÉCOMMUNICATION VERS UN TERMINAL DE RADIOTÉLÉPHONIE MOBILE AINSI QUE PASSERELLE DE RADIOTÉLÉPHONIE MOBILE

(30) Priorität: 20.04.2011 DE 102011000781
(43) Veröffentlichungstag der Anmeldung: 26.02.2014
(73) Patentinhaber: Teles AG Informationstechnologien, 10587 Berlin (DE)
(72) Erfinder: PAETSCH, Frank, 12357 Berlin (DE); BERNDT, Heiner, 13089 Berlin (DE)
(74) Vertreter: Müller, Wolfram Hubertus
(86) Internationale Anmeldenummer: PCT/EP2012/057048
(87) Internationale Veröffentlichungsnummer: WO 2012/143376

(56) Entgegenhaltungen:
- DE-A1- 10 314 144
- US-A1- 2005 186 960

## Beschreibung

Die Erfindung betrifft ein Verfahren zum Leiten von Telekommunikationsverbindungen (TK-Verbindungen) zu einem Mobilfunk-Endgerät. Sie betrifft des Weiteren ein Mobilfunk-Gateway, das geeignet ist, an der Durchführung des Verfahrens mitzuwirken.

### Hintergrund der Erfindung

Es ist bekannt, dass ein Mobilfunk-Endgerät im Falle des Aufenthaltes des Nutzers des Mobilfunk-Endgerätes in einem ausländischen Staat über ein internationales Roaming seine Konnektivität aufrecht erhält und dementsprechend in einem fremden Mobilfunknetz des anderen Staates selbsttätig Anrufe empfangen oder tätigen kann. Gleichzeitig verhält es sich so, dass Mobilfunkanbieter für ein internationales Roaming hohe Durchleitungsgebühren verlangen, so dass das Nutzen eines Roaming im Ausland mit erheblichen Kosten verbunden ist. Die gleiche Problematik stellt sich - wenn auch in der Regel mit geringeren Kostenfolgen - bei jeder Nutzung eines Mobilfunknetzes, das nicht das Heimatnetz eines betrachteten Mobilfunk-Endgerätes ist.

Es sind des Weiteren sogenannte Mobilfunk-Gateways bekannt, die eine Schnittstelle zwischen einem oder mehreren Telekommunikations-Mobilfunknetzen und beliebigen anderen Netzen, beispielsweise einem Telekommunikations-Festnetz oder einem IP-Netz bereitstellen. Ein Mobilfunk-Gateway wird von dem Nutzer eines anderen Netzes angerufen und leitet die gewünschte Verbindung über einen Mobilfunkkanal in das Mobilfunknetz weiter, in dem sich der gerufene Teilnehmer befindet. Hierzu implementiert das Mobilfunk-Gateway die Funktionalität eines Mobilfunktelefons und ruft gewissermaßen als Mobilfunktelefon den gerufenen Teilnehmer an. Mobilfunk-Gateways verfügen somit über die gleichen Mobilfunkmodule, wie sie in Mobilfunk-Endgeräten (Handys) zum Einsatz kommen. Derartige Mobilfunk-Gateways sind beispielsweise aus der DE 103 14 144 A1 bekannt.

Dabei ist vorgesehen, dass ein Mobilfunk-Gateway eine Vielzahl von SIM-Karten für die verwalteten Mobilfunkkanäle enthält. Es können beliebige SIM-Karten verschiedener Netzbetreiber eingesetzt werden. Eine SIM-Karte ist eine Einsteckkarte mit einer Kennung (IMSI = International Mobile Subscriber Identity), die einen Netzteilnehmer eindeutig identifiziert und über die ein Mobilfunkgerät einem bestimmten Netzbetreiber zugeordnet wird und eine bestimmte Rufnummer erhält. Darüber hinaus weist eine SIM-Karte als weitere SIM-Informationsdaten eine PIN-Nummer (PIN - Personal Identity Number), sicherheitsrelevante Daten wie Kommunikationsschlüssel und Sicherheitsalgorithmen, nutzerspezifische Daten wie Kurzwahlnummern sowie netzspezifische Daten wie die Kennung des aktuellen Aufenthaltsbereiches auf. Eine SIM-Karte personalisiert ein Mobilfunk-Endgerät hinsichtlich des Nutzers und hinsichtlich des Netzbetreibers und ermöglicht die Abrechnung von Gesprächsgebühren von dem Netzbetreiber.

Weiter sind sogenannte SIM-Server bekannt. In einem SIM-Server werden SIM-Karten für die Mobilfunkkommunikation an einem zentralen Ort bzw. einem zentralen Computer bereitgestellt. Je nach Anforderung und Bedarf wird eine SIM-Karte seitens eines Mobilfunk-Gateways von dem zentralen Computer angefordert und von diesem dem Mobilfunk-Gateway bereitgestellt. Dieses Bereitstellen der SIM-Karte für die Mobilfunkkommunikation erfolgt nicht physisch. Es werden lediglich die SIM-Informationsdaten, die eine SIM-Karte identifizieren und deren Funktionalität widerspiegeln, per Datenfernübertragung an das Mobilfunk-Gateway übertragen. Die SIM-Karte befindet sich somit gewissermaßen virtuell auf einem zentralen Computer und ihre Funktionalität wird bei Bedarf auf dem Mobilfunk-Gateway auf der Grundlage spezifischer Informationen und Daten, die vom zentralen Computer übertragen werden, emuliert. Dies ermöglicht die Verwendung eines zentralen SIM-Karten-Pools für ein oder mehrere Mobilfunk-Gateways. Derartige SIM-Server sind beispielsweise in der DE 103 11 980 A1 beschrieben.

Die US 2005/186960 A1 beschreibt ein Verfahren zum Leiten von Telekommunikationsverbindungen zu einem Mobilfunk-Endgerät, das sich nicht im Empfangsbereich seines Heimatnetzes befindet, bei dem ein drahtloser Sprach- und Datenverkehr zu Endgeräten, die sich in einer Roamingsituation befinden, über ein VoIP-Netz (VoIP - Voice over Internet Protocol) zugestellt wird. Ein Nachteil dieses Verfahrens besteht darin, dass ein Mobilfunk-Gateway in eine Mobilfunkinfrastruktur eingebunden werden muss, um eine Rufumleitung zu implementieren, wodurch das Problem eines hohen Arbeits- und Kostenaufwands entsteht.

Der vorliegenden Erfindung liegt die Aufgabe zu Grunde, ein Verfahren zum Leiten von Telekommunikationsverbindungen (TK-Verbindungen) zu einem Mobilfunk-Endgerät bereitzustellen, das die mit einem konventionellen Roaming verbundenen Kosten reduziert und trotzdem eine Konnektivität des Mobilfunk-Endgerätes bereitstellt. Der vorliegenden Erfindung liegt des Weiteren die Aufgabe zugrunde, ein Mobilfunk-Gateway bereitzustellen, das in einem solchen Verfahren einsetzbar ist.

### Zusammenfassung der Erfindung

Diese Aufgabe wird erfindungsgemäß durch ein Verfahren mit den Merkmalen des Anspruchs 1 und ein Mobilfunk-Gateway mit den Merkmalen des Anspruchs 12 gelöst. Ausgestaltungen der Erfindung sind in den Unteransprüchen angegeben.

Das erfindungsgemäße Verfahren geht von der Situation aus, dass sich ein Mobilfunk-Endgerät nicht im Empfangsbereich seines Heimatnetzes befindet. Beispielsweise befindet sich das Mobilfunk-Endgerät bezogen auf den Staat, in dem sich sein Heimatnetzwerk befindet, in einem ausländischen Staat. Es kann jedoch ebenfalls die Situation vorliegen, dass das aktuell verfügbare Mobilfunknetz ein beliebiges anderes Mobilfunknetz des gleichen Staates ist oder das am Aufenthaltsort des Mobilfunk-Endgerätes derzeit überhaupt kein Mobilfunknetz zugänglich ist. Das Mobilfunk-Endgerät weist eine erste, dem Heimatnetz zugeordnete SIM-Karte auf. Die SIM-Karte umfasst in an sich bekannter Weise SIM-Informationsdaten, die in der Regel eine IMSI, eine PIN, Sicherheitsalgorithmen und nutzerspezifische Daten enthält. Der SIM-Karte ist eine erste Rufnummer zugeordnet, die ebenfalls auf der SIM-Karte enthalten sein kann, jedoch nicht muss.

Erfindungsgemäß wird in einem ersten Schritt im Mobilfunk-Endgerät oder einem diesem zugeordneten Gerät eine Nachricht automatisch erzeugt. Diese Nachricht enthält zumindest die SIM-Informationsdaten der SIM-Karte, d. h., diejenigen Informationen, die zum Einbuchen der SIM-Karte in dem Heimatnetz erforderlich sind. Ein Ereignis, dass das Erzeugen einer solchen Nachricht auslöst, kann beispielsweise die Feststellung sein, dass ein ausländisches Mobilfunknetz und/oder ein zum Heimatnetz alternatives Mobilfunknetz und/oder kein oder kein gewünschtes Mobilfunknetz am Standort des Mobilfunk-Endgerätes vorliegen. Ein Ereignis, dass das Erzeugen einer solchen Nachricht auslöst, kann des Weiteren eine definierte manuelle Eingabe eines Nutzers des Mobilfunk-Endgerätes sein.

In einem zweiten Schritt wird die Nachricht von dem Mobilfunk-Endgerät oder einem mit dem Mobilfunk-Endgerät verbundenen Gerät direkt oder indirekt an ein Mobilfunk-Gateway versandt. Dieses Versenden erfolgt in einer Ausführungsvariante mittels einer Softwareapplikation des Mobilfunk-Endgerätes. In einer anderen Ausführungsvariante ist vorgesehen, dass die Nachricht durch ein mit dem Mobilfunk-Endgerät verbundenes Gerät versandt wird, bei dem es sich beispielsweise um einen PC, ein Notebook, ein Netbook oder ein integriertes Zugangsgerät (IAD - Integrated Access Device) handelt.

In einem weiteren Schritt werden Zuordnungsinformationen am Mobilfunk-Gateway bereitgestellt, die den Absender der Nachricht, d. h. das Mobilfunk-Endgerät oder das mit dem Mobilfunk-Endgerät verbundene Gerät, identifizieren. Über die Zuordnungsinformationen wird dem Mobilfunk-Gateway ermöglicht, mit dem Absender der Nachricht zu kommunizieren und insbesondere Sprachdaten und andere Daten, die er von einem Dritten erhält, an das Mobilfunk-Endgerät weiterzuleiten. Bei den Zuordnungsinformationen handelt es sich beispielsweise um Absenderinformationen, die automatisch im Rahmen z.B. einer VolP-Registrierung oder durch eine geeignete Konfiguration bereitgestellt werden.

Nach Erhalt der Nachrichten am Mobilfunk-Gateway bucht sich ein Modul des Mobilfunk-Gateways am Standort des Mobilfunk-Gateways im Heimatnetz unter Verwendung der erhaltenen SIM-Informationsdaten ein. Dies hat zur Folge, dass jede an die erste Rufnummer gerichtete TK-Verbindung im Folgenden an das Mobilfunk-Gateway geleitet wird. Das Mobilfunk-Gateway ordnet nun eine solche TK-Verbindung anhand der Zuordnungsinformationen dem Absender der Nachricht zu. Es leitet eine solche TK-Verbindung dann vom Mobilfunk-Gateway an den Absender.

Ebenso kann vorgesehen sein, dass jede TK-Verbindung, die von dem Mobilfunk-Gateway abgeht, beispielsweise ein abgehendes Telefongespräch, zunächst zu dem Mobilfunk-Gateway geleitet wird (beispielsweise über ein IP-Netz oder ein TDM-Netz) und von diesem über das Heimatnetz per Mobilfunk an den Empfänger versandt wird. Dabei kann vorgesehen sein, dass die entsprechende TK-Verbindung von dem Heimatnetz nicht direkt, sondern über ein oder mehrere weitere Netze an den Empfänger geroutet wird.

Es wird somit ein Verfahren bereitgestellt, bei dem die SIM-Informationsdaten der SIM-Karte eines Mobilfunk-Endgeräts via Datenübertragung zu einem Mobilfunk-Gateway übertragen werden. Dieses (bzw. eines seiner Module) bucht sich dann unter Verwendung dieser SIM-Informationsdaten an dem Standort des Mobilfunk-Gateways im Mobilfunk-Heimatnetz des Mobilfunk-Endgerätes ein. Das entsprechende Modul des Mobilfunk-Gateways wird damit vom Heimatnetz als Mobilfunk-Endgerät der SIM-Karte angesehen.

Das Mobilfunk-Endgerät oder das diesem zugeordnete externe Gerät weist dabei eine Konnektivität zu dem Mobilfunk-Gateway auf, wozu diese beispielsweise über ein weiteres Kommunikationsnetz miteinander verbunden sind. Es liegt eine logische Verbindung vom Absender der Nachricht zum Mobilfunk-Gateway vor. Alle ankommenden und abgehenden Gespräche werden über das Mobilfunk-Gateway geleitet. Beispielsweise werden ankommende Gespräche und andere TK-Verbindungen vom Mobilfunk-Heimatnetz über das Mobilfunk-Gateway und das weitere Kommunikationsnetz zum externen Endgerät oder Mobilfunk-Endgerät geleitet.

Das erfindungsgemäße Verfahren erlaubt es, eine Konnektivität unter Verwendung der eigenen SIM-Karte eines Mobilfunk-Endgerätes aufrechtzuerhalten, selbst wenn am Standort des Mobilfunk-Endgerätes kein gewünschtes Mobilfunk-Netz vorliegt oder wenn am Ort des Mobilfunk-Endgerätes überhaupt kein Mobilfunk-Netz vorliegt. Mit Hilfe des erfindungsgemäßen Verfahrens können alle ein- und abgehenden Gespräche unter Einsatz der eigenen SIM-Karte (bzw. deren Informationsdaten) in gewohnter Weise realisiert werden, wobei insbesondere die Kosten eines Auslands-Roamings umgangen werden können.

In einer Abwandlung des erfindungsgemäßen Verfahrens ist vorgesehen, dass statt der SIM-Informationsdaten eine Information, die die SIM-Karte lediglich identifiziert, in der Nachricht versandt wird. Die Information, die die SIM-Karte identifiziert, kann z.B. ein privat vereinbarter Code oder eine bestimmte Identifikationsnummer, die der SIM-Karte zugeordnet ist, sein. Diese Information wird dann dazu verwendet, im Mobilfunk-Gateway eine Partner-SIM-Karte der SIM-Karte einzubuchen. Die Partner-SIM-Karte befindet sich dabei in einer Ausgestaltung bereits im Mobilfunk-Gateway und wird spätestens dann aktiviert, wenn das Mobilfunk-Gateway die Nachricht vom Mobilfunk-Endgerät mit der Information, die die SIM-Karte identifiziert, erhält. Über die übersandte Information, die die SIM-Karte identifiziert, kann dabei die Partner-SIM-Karte zugeordnet werden.

Alternativ kann vorgesehen sein, dass die Partner-SIM-Karte in einem SIM-Server angeordnet ist und lediglich die für eine Authentifizierung im Heimatnetzwerk relevanten Daten an das Mobilfunk-Gateway übertragen werden und dort die SIM-Karte emuliert wird. Die Übertragung der für eine Authentifizierung im Heimatnetzwerk relevanten Daten an das Mobilfunk-Gateway erfolgt dann, wenn die im Mobilfunk-Endgerät erzeugte Nachricht beim Mobilfunk-Gateway und/oder beim SIM-Server eingeht. Dabei kann vorgesehen sein, dass die Nachricht zunächst beim Mobilfunk-Gateway eingeht und dieses dann den SIM-Server über den Eingang der Nachricht informiert, worauf die für eine Authentifizierung im Heimatnetzwerk relevanten Daten vom SIM-Server an das Mobilfunk-Gateway übersandt werden. Ebenfalls kann vorgesehen sein, dass die automatisch im Mobilfunk-Endgerät erzeugte Nachricht über den SIM-Server an das Mobilfunk-Gateway übersandt wird und somit zuerst beim SIM-Server vorliegt, worauf der SIM-Server die für eine Authentifizierung im Heimatnetzwerk relevanten Daten an das Mobilfunk-Gateway übersendet.

Partner-SIM-Karten sind an sich bekannt. Es handelt sich um eine SIM-Karte, der die gleiche Rufnummer wie der eigentlichen SIM-Karte zugeordnet ist, die jedoch eine andere IMSI besitzt. Die Partner-SIM-Karte muss dabei schon beantragt und vorhanden sein, bevor das Verfahren durchgeführt wird.

Es wird darauf hingewiesen, dass der Begriff "SIM-Karte" im Sinne der vorliegenden Erfindung jede Einsteckkarte bezeichnet, die einen Netzteilnehmer eindeutig identifiziert, so dass ein Mobilfunkgerät mit einer solchen Einsteckkarte einem bestimmten Netzbetreiber zugeordnet werden und eine bestimmte Rufnummer erhalten kann. Der Begriff "SIM-Karte" bezeichnet somit nicht nur Einsteckkarten zur Identifikation eines Teilnehmers im GSM-Standard, sondern auch Einsteckkarten zur Identifikation eines Netzteilnehmers beliebiger anderer derzeitiger oder zukünftiger Mobilfunk-Standards.

Das Mobilfunk-Endgerät und/oder das mit dem Mobilfunk-Endgerät verbundene Gerät sind in einer Ausgestaltung der Erfindung über mindestens ein Kommunikationsnetz mit dem Mobilfunk-Gateway verbunden, so dass eine Datenverbindung zwischen diesen TK-Einheiten aufgebaut werden kann. Insbesondere erfolgt das Versenden der Nachricht von dem Mobilfunk-Gateway oder einem mit dem Mobilfunk-Gateway verbundenen Gerät an das Mobilfunk-Gateway sowie ein Weiterleiten einer TK-Verbindung zwischen dem Mobilfunk-Endgerät und dem Mobilfunk-Gateway über das mindestens eine Kommunikationsnetz. Die Zuordnungsinformationen, die eine Zuordnung des Absenders der Nachricht und dessen Identifikation aus Sicht des Mobilfunk-Gateways ermöglichen, umfassen dabei in einer Ausgestaltung zumindest die Adresse des Absenders in diesem Kommunikationsnetz.

Bei dem Kommunikationsnetz kann es sich um eine Telekommunikations-Festnetz (TDM-Netz), ein paketvermitteltes Netz (IP-Netz), insbesondere das Internet, oder ein weiteres Mobilfunknetz, das ungleich dem Heimatnetz ist, handeln. Im Falle der Realisierung als Telekommunikations-Festnetz findet eine Kommunikation zwischen dem Absender der Nachricht und dem Mobilfunk-Gateway über eine TDM-Datenverbindung statt. Bei der Nutzung eines paketvermittelten Netzes zur Kommunikation zwischen dem Absender der Nachricht und dem Mobilfunk-Gateway wird in einer Ausgestaltung der Erfindung eine VoIP-Verbindung aufgebaut. Die dabei automatisch erfolgende VoIP-Registrierung stellt als Zuordnungsinformation eine IP-Adresse des Absenders der Nachricht bereit. Für den Fall, dass ein weiteres Mobilfunknetz als Kommunikationsnetz eingesetzt wird, weist das betrachtete Mobilfunk-Endgerät beispielsweise zwei SIM-Karten auf. Während die SIM-Informationsdaten der einen SIM-Karte zum Mobilfunk-Gateway versandt werden, wird die andere SIM-Karte des Mobilfunk-Gateways dazu genutzt, diese Informationen über ein anderes Mobilfunknetz zu versenden. Dabei wird die Nachricht beispielsweise als SMS vom Mobilfunk-Endgerät an das Mobilfunk-Gateway versandt.

Das automatische Erzeugen einer Nachricht erfolgt in einer Ausgestaltung der Erfindung durch eine Software-Applikation, die auf dem Mobilfunk-Endgerät implementiert ist. Die Nachricht wird automatisch in dem Sinne erzeugt, dass die Software-Applikation die in der Nachricht enthaltenen Informationen selbständig zusammenstellt und in eine Nachricht einbettet. Dabei kann allerdings vorgesehen sein, dass die Applikation den Nutzer des Mobilfunk-Endgerätes fragt, ob er die automatische Erzeugung einer entsprechenden Nachricht wünscht, und der Nutzer dieses bestätigen muss. Die Nachricht wird über ein Netz, zu dem das Mobilfunk-Endgerät direkten Zugang hat (und das natürlich ungleich dem Heimatnetz des Mobilfunk-Endgerätes ist) an das Mobilfunk-Gateway gesandt. Bei diesem Netz handelt es sich beispielsweise um ein WLAN oder ein anderes Mobilfunknetz.

Sofern die Nachricht mit den SIM-Informationsdaten durch ein dem Mobilfunk-Endgerät zugeordnetes Gerät übersandt wird, so ist in einer Ausgestaltung vorgesehen, dass die SIM-Informationsdaten vom Mobilfunk-Endgerät über die Funktion "SIM-Access-Profile" zu dem mit dem Mobilfunk-Endgerät verbundenen Gerät übertragen wird, das daraufhin die Nachricht erzeugt und versendet oder, sofern die Nachricht bereits im Mobilfunk-Endgerät erzeugt ist, lediglich versendet. Die Funktion "SIM-Access-Profile" ist dabei im Bluetooth-Datenübertragungsstandard standardisiert; herkömmlich wird sie zur Mobilfunk-Kommunikation in Automobilen verwendet. Das zugeordnete Gerät kommuniziert beispielsweise über VoIP mit dem Mobilfunk-Gateway.

In einer Ausgestaltung der Erfindung ist vorgesehen, dass die automatisch im Mobilfunk-Endgerät erzeugte Nachricht bereits Zuordnungsinformationen zur Identifizierung des Absenders der Nachricht am Mobilfunk-Gateway enthält. Hierzu kann beispielsweise vorgesehen sein, dass in die Nachricht die Absenderinformationen des Absenders integriert werden.

Es kann jedoch ebenfalls vorgesehen sein, dass solche Zuordnungsinformationen im Rahmen gesonderter Nachrichten an das Mobilfunk-Gateway übersandt werden oder durch eine vorab erfolgende Konfiguration am Mobilfunk-Gateway und dem Mobilfunk-Endgerät bereitgestellt werden. Im Rahmen einer solchen Konfiguration kann beispielsweise vorgesehen werden, dass Mobilfunk-Endgeräte oder denen zugeordnete Geräte einen privat vereinbarten Code oder eine bestimmte Identifikationsnummer erhalten. Wenn das Mobilfunk-Gateway einen solchen Code oder eine solche Identifikationsnummer erhält, ordnet es auf der Grundlage eines solchen Codes oder einer solchen Identifikationsnummer dem Absender bestimmte Absenderinformationen und ein vordefiniertes Kommunikationsnetz automatisch zu.

Die Zuordnungsinformationen, die eine Kommunikation zwischen dem Mobilfunk-Gateway und dem Absender der Nachricht ermöglichen, können für jede TK-Verbindung neu erzeugt und bereitgestellt werden. Alternativ kann vorgesehen sein, dass solche Zuordnungsinformationen für einen längeren Zeitraum und für eine Vielzahl von TK-Verbindungen festgelegt werden.

Die im Mobilfunk-Endgerät oder dem dem Mobilfunk-Endgerät zugeordneten Gerät erzeugte Nachricht kann direkt oder alternativ über einen SIM-Server an das Mobilfunk-Gateway übersandt werden. Dabei kann vorgesehen sein, dass sämtliche oder zumindest die für das vorliegende Verfahren relevanten Funktionen des Mobilfunk-Gateways über einen SIM-Server kontrolliert werden. Bei Routen der Nachricht über einen SIM-Server ergeben sich ansonsten keine Besonderheiten: da ein SIM-Server eine SIM-Karte ohnehin virtuell, d. h. mittels der entsprechenden SIM-Informationsdaten an ein Mobilfunk-Gateway überträgt, sind die in der erzeugten Nachricht enthaltenen SIM-Informationsdaten nicht anders als andere SIM-Informationsdaten, die der SIM-Server an das Mobilfunk-Gateway überträgt.

Das erfindungsgemäße Verfahren betrachtet als TK-Verbindungen insbesondere Telefongespräche, SMS-Nachrichten und Datenverbindungen wie z.B. Punkt-zu-Punkt Verbindungen. Ebenso wie ankommende Telefongespräche können auch ankommende SMS-Nachrichten oder Datenverbindungen gemäß dem erfindungsgemäßen Verfahren kostengünstig weitergeleitet werden. Die SMS-Nachrichten und Nutzdaten der Datenverbindungen werden dabei ebenfalls über das weitere Kommunikationsnetz, ggf. unter Verwendung geeigneter Standards, zwischen dem Mobilfunk-Endgerät und dem Mobilfunk-Gateway übertragen.

Die Erfindung betrifft des Weiteren ein Mobilfunk-Gateway, der die folgenden Merkmale aufweist:
- eine Mehrzahl von Funkmodulen für die Mobilfunkkommunikation, wobei dem Mobilfunk-Gateway eine Mehrzahl von SIM-Karten zugeordnet und/oder zuordenbar sind, die jeweils eine Nutzung eines Funkmoduls für die Mobilfunkkommunikation ermöglichen,
- Mittel, die geeignet sind, eine von einem Mobilfunk-Endgerät oder einem mit dem Mobilfunk-Endgerät verbundenen Gerät an das Mobilfunk-Gateway direkt oder indirekt gesandte Nachricht zu erfassen, die die SIM-Informationsdaten einer SIM-Karte des Mobilfunk-Endgeräts aufweist, oder die die SIM-Karte identifiziert, wobei der SIM-Karte eine erste Rufnummer zugeordnet ist,
- ein Modul, dass sich nach Erhalt der Nachricht am Standort des Mobilfunk-Gateways im Heimatnetz des Mobilfunk-Endgeräts unter Verwendung der erhaltenen SIM-Informationsdaten oder unter Verwendung einer Partner-SIM-Karte einbucht, so dass jede an die erste Rufnummer gerichtete TK-Verbindung an das Mobilfunk-Gateway geleitet wird,
- Mittel, die Zuordnungsinformationen zur Identifikation des Absenders der Nachricht erfassen und/oder erzeugen, und
- Mittel, die eine an die erste Rufnummer des Mobilfunk-Endgeräts gerichtete und an das Mobilfunk-Gateway geleitete TK-Verbindung an den Absender der Nachricht unter Verwendung der Zuordnungsinformationen weiterleiten.

Die Mittel, die die genannten Funktionalitäten des Mobilfunk-Gateways realisieren, werden beispielsweise durch Software bereitgestellt.

### Beschreibung von Ausführungsbeispielen

Die Erfindung wird nachfolgend unter Bezugnahme auf die Figuren der Zeichnung anhand mehrerer Ausführungsbeispiele näher erläutert. Es zeigen:
- Figur 1: ein erstes Ausführungsbeispiel einer Telekommunikationsanordnung, die zur Durchführung des erfindungsgemäßen Verfahrens geeignet und ausgebildet ist;
- Figur 2: ein zweites Ausführungsbeispiel einer Telekommunikationsanordnung, die zur Durchführung des erfindungsgemäßen Verfahrens geeignet und ausgebildet ist;
- Figur 3: ein drittes Ausführungsbeispiel einer Telekommunikationsanordnung, die zur Durchführung des erfindungsgemäßen Verfahrens geeignet und ausgebildet ist; und
- Figur 4: ein Ablaufdiagramm, das Schritte eines beispielhaften erfindungsgemäßen Verfahren zum Leiten von TK-Verbindungen zu einem Mobilfunk-Gateway angibt.

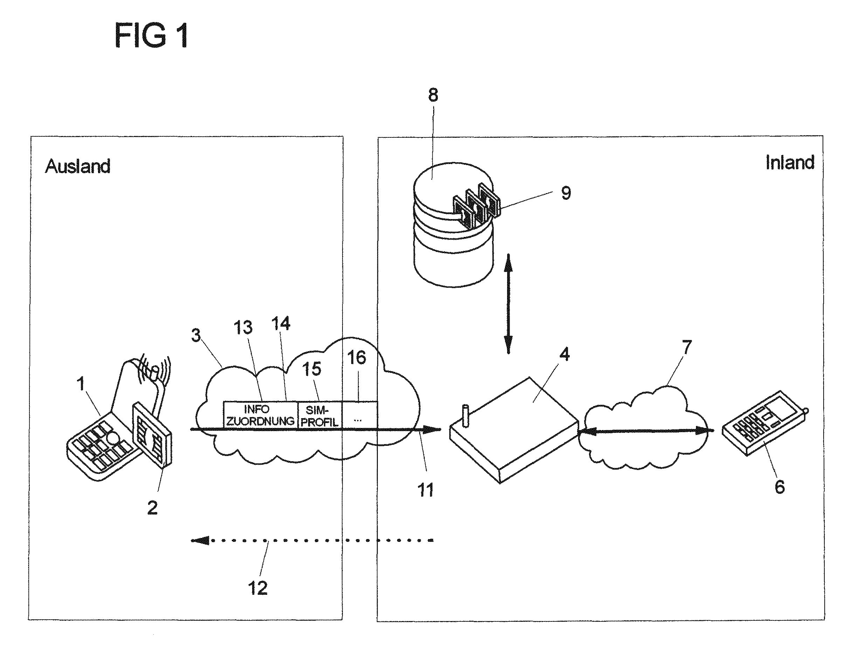

Die Figur 1 zeigt eine Telekommunikationsanordnung, die Netzwerke und Telekommunikations-Komponenten umfasst, mit denen ein erfindungsgemäßes Verfahren zum Leiten von TK-Verbindungen zu einem Mobilfunk-Endgerät realisierbar ist.

Die Telekommunikationsanordnung umfasst als wesentliche Komponenten ein Mobilfunk-Endgerät 1 und ein Mobilfunk-Gateway 4. Optional ist zusätzlich ein SIM-Server 8 vorgesehen. Das Mobilfunk-Gateway 4 ist an ein Heimatnetz 7 des Mobilfunk-Endgerätes 1 angeschlossen. An das Heimatnetz 7 sind weitere Mobilfunk-Endgeräte 6 angeschlossen.

Gemäß der Figur 1 wird die Situation betrachtet, dass das Mobilfunk-Endgerät 1 und sein Nutzer sich im Ausland befinden. Der Begriff "Ausland" dient dabei zur Abgrenzung gegenüber dem Staat oder der Region, in dem sich das Heimatnetz des Mobilfunk-Endgerätes 1 befindet ("Inland"). In weiteren Ausführungsbeispielen, für die die folgenden Ausführungen in entsprechender Weise gelten, befinden sich das Mobilfunk-Endgerät 1 und sein Nutzer dagegen nicht im Ausland, sondern in dem Staat oder der Region, in der auch das Heimatnetz realisiert ist. Auch kann vorgesehen sein, dass sich das Mobilfunk-Endgerät 1 an einem Ort im In- oder Ausland befindet, in dem kein Zugang zu irgendeinem Mobilfunknetz besteht.

Dem Mobilfunk-Endgerät 1 ist eine SIM-Karte 2 zugeordnet, die einen Netzteilnehmer eindeutig identifiziert und die das Mobilfunk-Endgerät 1 dem Heimatnetz 7 zuordnet. Die SIM-Karte 2 weist dabei in an sich bekannter Weise eine IMSI-Nummer und weitere Informationen auf.

Das Mobilfunk-Endgerät 1 besitzt zusätzlich zu seinem über die SIM-Karte 2 realisierbaren Zugang zu seinem Heimatnetz 7 Zugangsmittel für einen Zugang zu einem weiteren Kommunikationsnetz 3. Hierzu ist das Mobilfunk-Endgerät 1 im dargestellten Ausführungsbeispiel als Telefon ausgebildet, das den Industriestandard "Wifi" oder einen anderen WLAN-Standard unterstützt. Es handelt sich somit um ein WLAN-fähiges Mobilfunk-Endgerät 1. Über seine WLAN-Funktionalität besitzt das Mobilfunk-Endgerät 1 Zugang zu einem WLAN 3 als weiterem Kommunikationsnetz, wobei das WLAN über einen nicht dargestellte Gateway oder dergleichen mit dem Internet gekoppelt ist.

Das Mobilfunk-Gateway 4 weist eine Mehrzahl von Funkmodulen für die Mobilfunkkommunikation auf. Dem Mobilfunk-Gateway 4 sind eine Mehrzahl von SIM-Karten zugeordnet und zuordenbar, die jeweils eine Nutzung eines Funkmoduls für die Mobilfunkkommunikation ermöglichen. Zumindest einige der zugeordneten oder zuordenbaren SIM-Karten des Mobilfunk-Gateways 4 sind dem Heimatnetz 7 zugeordnet, so dass ein Funkmodul des Mobilfunk-Gateways 4 bei einer Mobilfunkkommunikation über das Heimatnetz 7 mit einem weiteren Mobilfunk-Endgerät 6 selbst ein Mobilfunk-Endgerät darstellt.

Dabei kann vorgesehen sein, dass das Heimatnetz 7 mit weiteren Mobilfunknetzen und/oder einer oder mehreren Telekommunikations-Festnetzen und/oder IP-Netzen zusammengeschaltet ist und das weitere Mobilfunk-Endgerät 6 nicht unmittelbar, sondern über ein oder mehrere weitere Netze mit dem Heimatnetz 7 verbunden ist.

Der optional vorgesehene SIM-Server 8 weist einen Pool von SIM-Karten 9 auf. Je nach Anforderungsbedarf wird eine SIM-Karte 9 dem Mobilfunk-Gateway 4 vom SIM-Server 8 bereitgestellt, wobei das Bereitstellen einer solchen SIM-Karte 9 nicht physisch erfolgt, sondern lediglich die SIM-Informationsdaten, die eine SIM-Karte identifizieren und deren Funktionalität widerspiegeln, per Datenübertragung an das Mobilfunk-Gateway 4 übertragen werden.

Es wird im Folgenden der Fall betrachtet, dass beim sich im Ausland befindlichen Mobilfunk-Endgerät 1 die dem Heimatnetzwerk 7 zugeordnete SIM-Karte 2 nicht für die Mobilfunkkommunikation benutzt werden soll. Der Grund besteht beispielsweise darin, dass die Nutzung des verfügbaren Mobilfunknetzes mit zu hohen Roaming-Gebühren verbunden wäre und/oder ein Mobilfunknetz aktuell nicht zur Verfügung steht. Dies wird im Mobilfunk-Endgerät 1 automatisch erkannt, beispielsweise aufgrund eines Betriebs im Ausland oder durch Erkennen eines vorhandenen alternativen Mobilfunknetzes. Alternativ und/oder ergänzend kann vorgesehen sein, dass der Nutzer des Mobilfunk-Endgerätes manuell angeben kann, dass die aktuelle SIM-Karte nicht zur Kommunikation verwendet werden soll.

Eine im Mobilfunk-Endgerät 1 vorhandene Softwareapplikation erzeugt in diesem Fall eine Nachricht, die zumindest die SIM-Informationsdaten der SIM-Karte 2 umfasst. Diese Nachricht wird über eine Datenverbindung 11, die über das WLAN 3 und das Internet zum Mobilfunk-Endgerät 4 realisiert wird, an das Mobilfunk-Endgerät 4 übertragen. Hierzu ist vorgesehen, dass das Mobilfunk-Endgerät 1 eine VoIP-Registrierung vornimmt, bei der ihm eine Absenderadresse (in der Regel eine dynamisch zugeordnete IP-Adresse) zugeordnet wird. Das Mobilfunk-Endgerät 1 erzeugt nun eine Nachricht 13, die als Informationsfelder die SIM-Informationsdaten 15 und Informationsdaten 14 betreffend eine Zuordnung und Identifikation des Mobilfunk-Endgerätes 1 umfasst, wobei diese Informationsdaten 14 durch die zugeordnete Absenderadresse bereitgestellt werden können. Die Nachricht kann weitere Informationen 16 enthalten.

Die Nachricht 13 ist in der Figur 1 nur schematisch dargestellt. Der konkrete Aufbau der Nachricht 13 kann in anderer Weise erfolgen. Die Information 13 wird über das WLAN 3 und die zum Mobilfunk-Gateway 4 aufgebaute VoIP-Verbindung an das Mobilfunk-Gateway 4 übersandt. Dieses Versenden kann direkt erfolgen oder alternativ über den SIM-Server 8. Im letzteren Fall würde der SIM-Server 8 die Nachricht 13 an das Mobilfunk-Gateway 4 weiterleiten.

Anhand der Zuordnungsinformationen 14 ist das Gateway 4 in der Lage, über eine Datenverbindung 12, ebenfalls über das Internet und das WLAN 3, Daten an das Mobilfunk-Endgerät 1 zu übersenden. Es liegt eine logische Verbindung zwischen dem Mobilfunk-Endgerät 1 und dem Mobilfunk-Gateway 4 über das Kommunikationsnetz 3 vor.

Nach Erhalt der Nachricht 13 bucht sich ein Funkmodul des Mobilfunk-Gateways 4 am Standort des Mobilfunk-Gateways 4 im Heimatnetz 7 unter Verwendung der erhaltenen SIM-Informationsdaten ein. Die SIM-Karte 2 wird somit am Mobilfunk-Gateway 4 virtuell bereitgestellt und dort in das Mobilfunknetz 7 eingebucht. Dies führt dazu, dass jede an die Rufnummer der SIM-Karte 2 gerichtete Verbindung an das Mobilfunk-Gateway 4 geleitet wird. Dieses leitet eine solche TK-Verbindung dann über die Datenverbindung 12 an den Absender der erhaltenen Nachricht, d. h. das Mobilfunk-Endgerät 1, unter Verwendung der Zuordnungsinformationen 14 weiter.

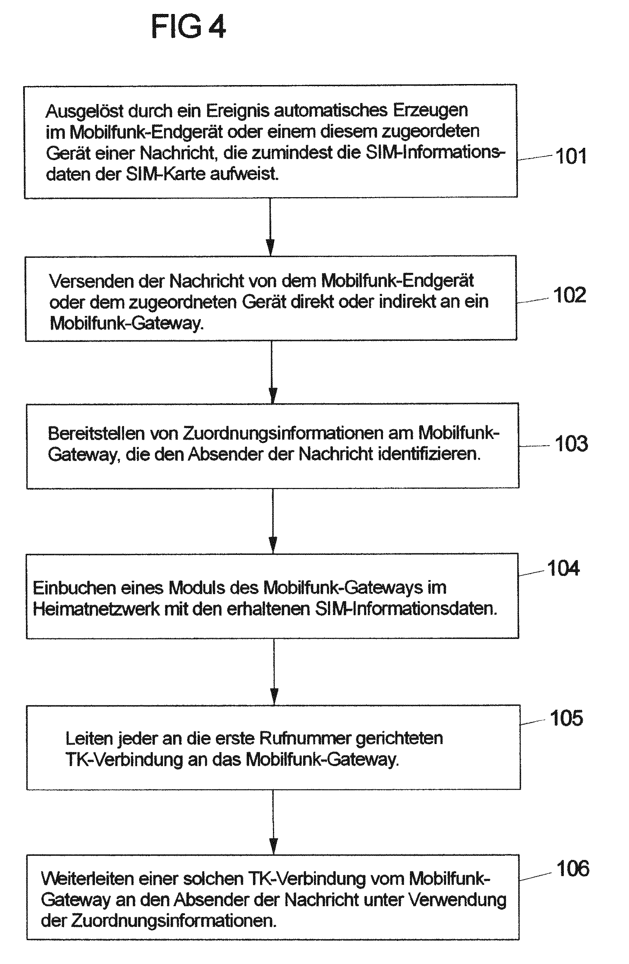

Die entsprechenden Verfahrensschritte sind in der Figur 4 nochmals in chronologischer Abfolge dargestellt. In einem ersten Schritt 101 wird - ausgelöst durch ein Ereignis wie beispielsweise das automatische Erkennen eines fremden Mobilfunknetzes - im Mobilfunk-Endgerät 1 eine Nachricht 13 erzeugt, die zumindest die SIM-Informationsdaten 15 der SIM-Karte, die auch als SIM-Profil bezeichnet werden können, enthält. Daraufhin wird im Schritt 102 eine solche Nachricht 13 von dem Mobilfunk-Endgerät 1 direkt oder indirekt über den SIM-Server 8 an das Mobilfunk-Gateway 4 gesandt. Damit der Absender der Nachricht 13, d. h. im betrachteten Fall das Mobilfunk-Endgerät 1, dem Mobilfunk-Gateway 4 als Absender zugeordnet werden kann, werden am Mobilfunk-Gateway 4 Zuordnungsinformationen bereitgestellt, Schritt 103. Diese können automatisch, z. B. im Rahmen einer VoIP-Registrierung des Mobilfunk-Endgeräts 1, oder durch eine geeignete Konfiguration bereitgestellt werden. Eine solche Konfiguration sieht beispielsweise vor, dass dem Mobilfunk-Endgerät ein bestimmter Code zugeordnet ist, bei dessen Erhalt das Mobilfunk-Gateway 4 weiß, über welches Netz und mit welcher Adresse es mit dem Mobilfunk-Endgerät 1 kommunizieren kann. Ein solcher Code wäre für einen solchen Fall in dem Informationsfeld 14 der Nachricht 13 enthalten.

Es folgt im Weiteren in Schritt 104 ein Einbuchen eines der Funkmodule des Mobilfunk-Gateways 4 im Heimatnetz 7 unter Verwendung der erhaltenen SIM-Informationsdaten. Im Folgenden wird zwischen dem entsprechenden Funkmodul des Mobilfunk-Gateway 4 und dem Mobilfunk-Gateway 4 nicht weiter unterschieden. In Schritt 105 wird aufgrund des Einbuchens der SIM-Karte am Mobilfunk-Gateway 4 jede an die erste Rufnummer der SIM-Karte 2 gerichtete TK-Verbindung an das Mobilfunk-Gateway 4 geleitet. Dieses leitet unter Verwendung der enthaltenen Zuordnungsinformationen eine solchen TK-Verbindung an den Absender der Nachricht 13, d. h. an das Mobilfunk-Endgerät 1 weiter. Alle ankommenden Gespräche werden somit über das Mobilfunk-Gateway und das Kommunikationsnetz 3 zum Mobilfunk-Endgerät 1 geleitet. In entsprechender Weise werden auch vom Mobilfunk-Endgerät abgehende Gespräche über das Mobilfunk-Gateway 4 zu einem Kommunikationspartner 6 geroutet.

Das erfindungsgemäße Verfahren beruht auf dem Gedanken, die SIM-Karte statt am aktuellen Ort des Mobilfunk-Endgerätes 1 am Mobilfunk-Gateway 4 einzubuchen und die dann an das Mobilfunk-Gateway 4 gerouteten TK-Verbindungen über ein kostengünstiges Netz wie beispielsweise ein VoIP-Netz an das Mobilfunk-Endgerät 1 zu leiten.

Es wird darauf hingewiesen, dass unter dem Begriff "Leiten" und "Weiterleiten" einer TK-Verbindung verstanden wird, dass sowohl die einer TK-Verbindung zugehörigen Signalisierungsinformationen als auch die eigentlichen Nutzdaten (Gesprächsdaten, SMS-Nachrichten und andere Daten wie z.B. Daten eines Computers) über die jeweils betroffenen Kommunikationseinrichtungen und Netze geroutet werden. Das Leiten und Weiterleiten einer TK-Verbindung betrifft somit nicht nur das Leiten und Weiterleiten von Signalisierungsinformationen, sondern auch der eigentlichen Nutzdaten/Gesprächsdaten. Das Gespräch selbst wird über das Gateway 4 und das zwischengeschaltete Kommunikationsnetz 3 an das Mobilfunk-Endgerät 1 geleitet.

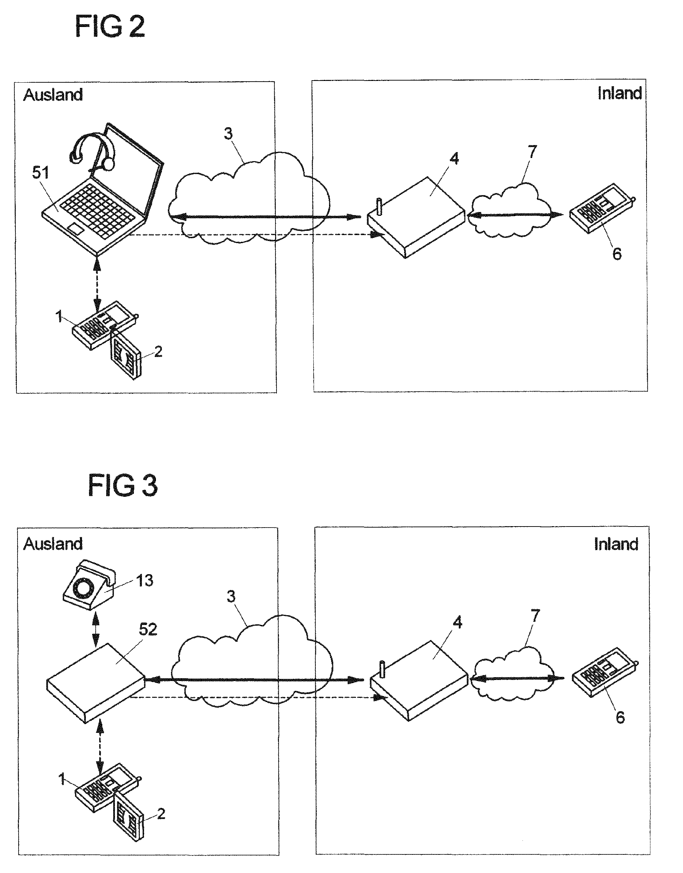

Figur 2 zeigt eine Abwandlung des in Bezug auf die Figuren 1 und 4 erläuterten Verfahrens. Bei dem Ausführungsbeispiel der Figur 2 ist einem Mobilfunk-Endgerät 1, das wiederum eine SIM-Karte 2 aufweist, ein weiteres Gerät 51 zugeordnet. Bei dem weiteren Gerät 51 handelt es sich im dargestellten Ausführungsbeispiel um eine Notebook oder ein Netbook. Das Verfahren verläuft grundsätzlich wie in Bezug auf die Figur 1 beschrieben, wobei allerdings die Nachricht 13 der Figur 1 von dem Gerät 51 über das Kommunikationsnetz 3 versendet wird und eine Datenübertragung zwischen dem Gerät 51 und dem Mobilfunk-Gateway 4 erfolgt.

Damit das Gerät 51 eine Nachricht 13 mit SIM-Informationsdaten 15 erzeugen und an das Mobilfunk-Gateway 4 senden kann, muss das Mobilfunk-Endgerät 1 die entsprechenden SIM-Informationsdaten an das Gerät 51 übersenden. Dies erfolgt beispielsweise mittels des Funkübertragungsstandards Bluetooth unter Verwendung des Bluetooth-Datenübertragungsprotokolls "SIM-Access-Profile". Mit diesem Protokoll ist es möglich, SIM-Informationsdaten vom Mobilfunk-Endgerät 1 an das Gerät 51 zu übertragen. Gleichzeitig können über dieses Protokoll Gesprächsdaten zwischen dem Mobilfunk-Endgerät 1 und dem Gerät 51 übertragen werden. Statt Bluetooth kann auch ein anderer Funkübertragungsstandard zur Datenübertragung zwischen dem Mobilfunk-Endgerät 1 und Gerät 51 verwendet werden. Auch kann eine Datenübertragung z.B. über Kabel erfolgen.

Das Notebook oder Netbook 51 kann direkt, beispielsweise über eine DSL-Verbindung, oder über ein WLAN oder anderes Funknetz mit dem Internet als Kommunikationsnetz 3 verbunden sein.

Bei dieser Ausführungsvariante ist somit vorgesehen, dass die SIM-Informationsdaten via Bluetooth an das Notebook oder Netbook 51 weitergegeben werden. Das Notebook 51 realisiert über ein integriertes SoftPhone eine VoIP-Verbindung mit dem Mobilfunk-Gateway 4. Über dieses SoftPhone des Notebooks 51 wird eine Datenübertragung zwischen dem Gerät 51 und dem Mobilfunk-Gateway 4 realisiert. Am Ort des Mobilfunk-Gateways 4 wird dabei, wie zuvor in Figur 1 beschrieben, die SIM-Karte 2 bzw. deren SIM-Informationsdaten im Heimatnetz 7 eingebucht. Eingehende Gespräche werden somit zunächst an das Mobilfunk-Gateway 4 und von diesem an das Notebook oder Netbook 51 geleitet, welches die erhaltenen oder ausgesandten Gesprächsdaten über Bluetooth mit dem Mobilfunk-Endgerät 1 kommuniziert.

Die Figur 3 zeigt eine weitere Ausführungsvariante des in der Figur 1 dargestellten Verfahrens. Bei dieser Ausführungsvariante ist das Mobilfunk-Endgerät 1, das wiederum eine SIM-Karte 2 aufweist, über ein integriertes Zugriffsgerät (IAD - Integrated Access Device) mit dem Mobilfunknetz 3 verbunden. Ein integriertes Zugriffsgerät ist ein Gerät zum Netzabschluss von NGN-Anschlüssen (NGN - Next Generation Network). An das integrierte Zugriffsgerät können dabei weitere Endgeräte wie ein analoges oder ISDN-Telefon 13 angeschlossen sein. Das integrierte Zugriffsgerät 52 übernimmt die Funktion eines Media-Gateways und stellt Kommunikationsverbindungen über das Mobilfunknetz 3 zum Mobilfunk-Gateway 4 her. Dabei werden die SIM-Informationsdaten vom Mobilfunk-Endgerät 1 wiederum beispielsweise via Bluetooth oder einen anderen Funkstandard an das integrierte Zugriffsgerät 52 übertragen. Das Verfahren erfolgt dann wie zuvor beschrieben.

Bei dem Kommunikationsnetz 3 kann es sich um ein VoIP-Netz wie das Internet handeln. Der Zugang zum Internet kann dabei beispielsweise über eine DSL-Verbindung oder über ein WLAN erfolgen. Bei dem Kommunikationsnetz 3 kann es sich jedoch auch um ein anderes kostengünstiges Netz handeln, beispielsweise ein TDM-Netz, also ein internationales Festnetz. Eine Gesprächsdatenübertragung über ein TDM-Netz ist kostengünstig im Vergleich zu bei einem Auslands-Roaming entstehenden Kosten.

Bei den Ausführungsbeispielen der Figuren 2 und 3 kann das Mobilfunk-Endgerät 1 auch in anderer Weise mit dem Gerät 51, 52 verbunden sein, beispielsweise über ein Kabel.

Die Erfindung beschränkt sich in ihrer Ausgestaltung nicht auf die vorstehend erläuterten Ausführungsbeispiele, die lediglich beispielhaft zu verstehen sind. Beispielsweise können zur Kommunikation zwischen dem Mobilfunk-Endgerät 1 und dem Mobilfunk-Gateway 4 andere als die dargestellten Netze und/oder Kommunikationsstandards verwendet werden. Auch kann vorgesehen sein, dass die Nachricht 13 weitere Informationen enthält, beispielsweise Authentifizierungsinformationen betreffend die jeweils zwischen dem Absender der Nachricht und dem Mobilfunk-Gateway aufgebaute Verbindung. Eine weitere Abwandlung sieht vor, dass nicht die SIM-Informationsdaten, sondern eine Information, die die SIM-Karte identifiziert, in der Nachricht versandt und dazu verwendet wird, im Mobilfunk-Gateway eine Partner-SIM-Karte der SIM-Karte einzubuchen.

## Patentansprüche

1. Verfahren zum Leiten von Telekommunikationsverbindungen, TK-Verbindungen, zu einem Mobilfunk-Endgerät (1), das sich nicht im Empfangsbereich seines Heimatnetzes (7) befindet, wobei das Mobilfunk-Endgerät (1) eine dem Heimatnetz (7) zugeordnete SIM-Karte (2) mit SIM-Informationsdaten (15) aufweist und der SIM-Karte (2) eine erste Rufnummer zugeordnet ist, und wobei das Verfahren die Schritte umfasst:
- ausgelöst durch ein Ereignis automatisches Erzeugen im Mobilfunk-Endgerät (1) oder einem diesem zugeordneten Gerät (51, 52) einer Nachricht (13), die zumindest die SIM-Informationsdaten (15) der SIM-Karte (2) oder eine Information, die die SIM-Karte identifiziert, aufweist;
- Versenden der Nachricht (13) von dem Mobilfunk-Endgerät (1) oder dem mit dem Mobilfunk-Endgerät (1) verbundenen Gerät (51, 52) direkt oder indirekt an ein Mobilfunk-Gateway (4);
- Bereitstellen von Zuordnungsinformationen (14) am Mobilfunk-Gateway (4), die den Absender der Nachricht (13) identifizieren;
- nach Erhalt der Nachricht (13) am Mobilfunk-Gateway (4) Einbuchen eines Moduls des Mobilfunk-Gateways (4) am Standort des Mobilfunk-Gateways (4) im Heimatnetz (7) unter Verwendung der erhaltenen SIM-Informationsdaten (15) oder unter Verwendung einer Partner-SIM-Karte, so dass jede an die erste Rufnummer gerichtete TK-Verbindung an das Mobilfunk-Gateway (4) geleitet wird; und
- Weiterleiten einer solchen TK-Verbindung vom Mobilfunk-Gateway (4) an den Absender (1, 51, 52) unter Verwendung der Zuordnungsinformationen (14).

2. Verfahren nach Anspruch 1, **dadurch gekennzeichnet, dass** des Weiteren jede TK-Verbindung, die von dem Mobilfunk-Endgerät (1) abgeht, zunächst zu dem Mobilfunk-Gateway (4) geleitet und von diesem über das Heimatnetz (7) versandt wird.

3. Verfahren nach Anspruch 1 oder 2, **dadurch gekennzeichnet, dass** das Versenden der Nachricht (13) von dem Mobilfunk-Endgerät (1) oder einem mit dem Mobilfunk-Endgerät (1) verbundenen Gerät an das Mobilfunk-Gateway (4) sowie ein Weiterleiten einer TK-Verbindung zwischen dem Mobilfunk-Endgerät (1) und dem Mobilfunk-Gateway (4) über mindestens ein Kommunikationsnetz (3) erfolgt.

4. Verfahren nach einem der vorangehenden Ansprüche, **dadurch gekennzeichnet, dass** das Ereignis, das die Nachricht (13) erzeugt,
- eine Feststellung im Mobilfunk-Endgerät (1) oder dem mit dem Mobilfunk-Endgerät (1) verbundenen Gerät (51, 52) ist, dass
∘ ein ausländisches Mobilfunknetz am aktuellen Standort des Mobilfunk-Endgeräts (1) vorliegt, und/oder
∘ ein zum Heimatnetz (7) alternatives Mobilfunknetz am aktuellen Standort des Mobilfunk-Endgeräts (1) vorliegt, und/oder
∘ kein oder kein gewünschtes Mobilfunknetz am aktuellen Standort des Mobilfunk-Endgeräts (1) vorliegt, oder
- eine definierte manuelle Eingabe eines Nutzers des Mobilfunk-Endgeräts (1) ist.

5. Verfahren nach einem der vorangehenden Ansprüche, **dadurch gekennzeichnet, dass** die Nachricht (13) von einer Softwareapplikation des Mobilfunk-Endgeräts (1) erzeugt wird.

6. Verfahren nach einem der vorangehenden Ansprüche, **dadurch gekennzeichnet, dass** die SIM-Informationsdaten (15) vom Mobilfunk-Endgerät (1) über die Funktion SIM-Access-Profile und eine Funk-Datenübertragung zu dem mit dem Mobilfunk-Endgerät (1) verbundenen Gerät (51, 52) übertragen werden, das daraufhin die Nachricht (13) versendet.

7. Verfahren nach einem der vorangehenden Ansprüche, **dadurch gekennzeichnet, dass** die automatisch im Mobilfunk-Endgerät (1) erzeugte Nachricht (13) bereits die Zuordnungsinformationen (14) zur Identifizierung des Absenders (1, 51, 52) der Nachricht (13) am Mobilfunk-Gateway (4) enthält.

8. Verfahren nach einem der vorangehenden Ansprüche, **dadurch gekennzeichnet, dass** die Zuordnungsinformationen (14) automatisch, beispielsweise durch eine VoIP-Registrierung, am Mobilfunk-Gateway (4) bereitgestellt werden.

9. Verfahren nach einem der Ansprüche 1 bis 8, **dadurch gekennzeichnet, dass** die erzeugte Nachricht (13) über einen SIM-Server (8) an das Mobilfunk-Gateway (4) übersandt wird.

10. Verfahren nach einem der vorangehenden Ansprüche, **dadurch gekennzeichnet, dass** die Information, die die SIM-Karte identifiziert, dazu verwendet wird, im Mobilfunk-Gateway eine Partner-SIM-Karte der SIM-Karte einzubuchen.

11. Verfahren nach einem der vorangehenden Ansprüche, **dadurch gekennzeichnet, dass** die Partner-SIM-Karte in einem SIM-Server (8) angeordnet ist und die für eine Authentifizierung relevanten Daten der Partner-SIM-Karte an das Mobilfunk-Gateway (4) übertragen werden, wenn die erzeugte Nachricht (13) beim Mobilfunk-Gateway (4) und/oder beim SIM-Server (8) eingeht.

12. Mobilfunk-Gateway, das aufweist:
- eine Mehrzahl von Funkmodulen für die Mobilfunkkommunikation, wobei dem Mobilfunk-Gateway (4) eine Mehrzahl von SIM-Karten (2, 9) zugeordnet und/oder zuordenbar sind, die jeweils eine Nutzung eines Funkmoduls für die Mobilfunkkommunikation ermöglichen,
- Mittel, die geeignet sind, eine von einem Mobilfunk-Endgerät (1) oder einem mit dem Mobilfunk-Endgerät (1) verbundenen Gerät (51, 52) an das Mobilfunk-Gateway (4) direkt oder indirekt gesandte Nachricht (13) zu erfassen, die die SIM-Informationsdaten (15) einer SIM-Karte (2) des Mobilfunk-Endgeräts (1) aufweist, oder die die SIM-Karte identifiziert, wobei der SIM-Karte (2) eine erste Rufnummer zugeordnet ist,
- ein Modul, dass sich nach Erhalt der Nachricht (13) am Standort des Mobilfunk-Gateways (4) im Heimatnetz (7) des Mobilfunk-Endgeräts (1) unter Verwendung der erhaltenen SIM-Informationsdaten (15) oder unter Verwendung einer Partner-SIM-Karte einbucht, so dass jede an die erste Rufnummer gerichtete Telekommunikationsverbindung, TK-Verbindung, an das Mobilfunk-Gateway (4) geleitet wird,
- Mittel, die Zuordnungsinformationen (14) zur Identifikation des Absenders (1, 51, 52) der Nachricht (13) erfassen und/oder erzeugen, und
- Mittel, die eine an die erste Rufnummer des Mobilfunk-Endgeräts (1) gerichtete und an das Mobilfunk-Gateway (4) geleitete TK-Verbindung an den Absender (1, 51, 52) der Nachricht (13) unter Verwendung der Zuordnungsinformationen (14) weiterleiten.

13. Mobilfunk-Gateway nach Anspruch 12, **dadurch gekennzeichnet, dass** das Mobilfunk-Gateway (4) dazu ausgebildet ist, des Weiteren jede TK-Verbindung, die von dem Mobilfunk-Endgerät (1) abgeht, über ein Kommunikationsnetz (3) zu empfangen und über das Heimatnetz (7) an den Empfänger (6) der TK-Verbindung zu versenden.

14. Mobilfunk-Gateway nach Anspruch 12 oder 13, **dadurch gekennzeichnet, dass** das Mobilfunk-Gateway (4) dazu ausgebildet ist, die Nachricht (13) über ein Kommunikationsnetz (3) zu empfangen und eine TK-Verbindung über das Kommunikationsnetz (3) an das Mobilfunk-Endgerät (1) weiterzuleiten.

15. Mobilfunk-Gateway nach einem der Ansprüche 12 bis 14, **dadurch gekennzeichnet, dass** das Mobilfunk-Gateway (4) derart ausgebildet ist, dass mindestens einige der Funktionen des Mobilfunk-Gateways (4) über einen SIM-Server (8) kontrolliert werden, insbesondere das Mobilfunk-Gateway (4) die für eine Authentifizierung relevanten Daten einer Partner-SIM-Karte von einem SIM-Server (8) erhält, wobei die Partner-SIM-Karte in dem SIM-Server (8) angeordnet ist.

## Claims

1. A method for routing telecommunications connections, TC connections, to a mobile radio terminal (1) which is not located in the receive region of its home network (7), wherein the mobile radio terminal (1) includes a SIM card (2) with SIM information data (15) assigned to the home network (7) and a first call number is assigned to the SIM card (2), and wherein the method comprises the following steps:
- triggered by an event, automatic generation of a message (13) in the mobile radio terminal (1) or a device (51, 52) assigned to the same, which includes at least the SIM information data (15) of the SIM card (2) or an information which identifies the SIM card;
- sending of the message (13) from the mobile radio terminal (1) or the device (51, 52) connected with the mobile radio terminal (1) directly or indirectly to a mobile radio gateway (4);
- providing assignment information (14) at the mobile radio gateway (4), which identifies the sender of the message (13);
- after receipt of the message (13) at the mobile radio gateway (4) inscribing a module of the mobile radio gateway (4) at the location of the mobile radio gateway (4) in the home network (7) by using the received SIM information data (15) or by using a partner SIM card, so that each TC connection addressed to the first call number is routed to the mobile radio gateway (4); and
- forwarding such TC connection from the mobile radio gateway (4) to the sender (1, 51, 52) by using the assignment information (14).

2. The method according to claim 1, **characterized in that** furthermore each TC connection which goes out from the mobile radio terminal (1) first is routed to the mobile radio gateway (4) and is sent from the same via the home network (7).

3. The method according to claim 1 or 2, **characterized in that** the sending of the message (13) from the mobile radio terminal (1) or a device connected with the mobile radio terminal (1) to the mobile radio gateway (4) as well as forwarding of a TC connection between the mobile radio terminal (1) and the mobile radio gateway (4) is effected via at least one communication network (3).

4. The method according to any of the preceding claims, **characterized in that** the event which generates the message (13) is
- a detection in the mobile radio terminal (1) or the device (51, 52) connected with the mobile radio terminal (1) that
∘ a foreign mobile radio network is present at the current location of the mobile radio terminal (1), and/or
∘ a mobile radio network alternative to the home network (7) is present at the current location of the mobile radio terminal (1), and/or
∘ no or no desired mobile radio network is present at the current location of the mobile radio terminal (1), or
- a defined manual input of a user of the mobile radio terminal (1).

5. The method according to any of the preceding claims, **characterized in that** the message (13) is generated by a software application of the mobile radio terminal (1).

6. The method according to any of the preceding claims, **characterized in that** the SIM information data (15) are transmitted from the mobile radio terminal (1) via the function SIM-Access-Profiles and a radio data transmission to the device (51, 52) connected with the mobile radio terminal (1), which device thereupon sends the message (13).

7. The method according to any of the preceding claims, **characterized in that** the message (13) automatically generated in the mobile radio terminal (1) already contains the assignment information (14) for identifying the sender (1, 51, 52) of the message (13) at the mobile radio gateway (4).

8. The method according to any of the preceding claims, **characterized in that** the assignment information (14) is provided automatically at the mobile radio gateway (4), for example by a VoIP registration.

9. The method according to any of claims 1 to 8, **characterized in that** the generated message (13) is sent to the mobile radio gateway (4) via a SIM server (8).

10. The method according to any of the preceding claims, **characterized in that** the information which identifies the SIM card is used to inscribe a partner SIM card of the SIM card in the mobile radio gateway.

11. The method according to any of the preceding claims, **characterized in that** the partner SIM card is arranged in a SIM server (8) and the data of the partner SIM card relevant for an authentification are transmitted to the mobile radio gateway (4), when the generated message (13) arrives at the mobile radio gateway (4) and/or the SIM server (8).

12. A mobile radio gateway, which includes:
- a plurality of radio modules for the mobile radio communication, wherein a plurality of SIM cards (2, 9) are assigned and/or assignable to the mobile radio gateway (4), which each provide for a utilization of a radio module for the mobile radio communication,
- means which are suitable to detect a message (13) sent directly or indirectly from a mobile radio terminal (1) or a device (51, 52) connected with the mobile radio terminal (1) to the mobile radio gateway (4), which includes the SIM information data (15) of a SIM card (2) of the mobile radio terminal (1) or which identifies the SIM card, wherein a first call number is assigned to the SIM card (2),
- a module which after receipt of the message (13) at the location of the mobile radio gateway (4) inscribes in the home network (7) of the mobile radio terminal (1) by using the SIM information data (15) received or by using a partner SIM card, so that each telecommunications connection, TC connection, addressed to the first call number is routed to the mobile radio gateway (4),
- means which detect and/or generate assignment information (14) for identifying the sender (1, 51, 52) of the message (13), and
- means which forward a TC connection addressed to the first call number of the mobile radio terminal (1) and routed to the mobile radio gateway (4) to the sender (1, 51, 52) of the message (13) by using the assignment information (14).

13. The mobile radio gateway according to claim 12, **characterized in that** the mobile radio gateway (4) is formed to furthermore receive every TC connection which goes out from the mobile radio terminal (1) via a communication network (3) and send it to the receiver (6) of the TC connection via the home network (7).

14. The mobile radio gateway according to claim 12 or 13, **characterized in that** the mobile radio gateway (4) is formed to receive the message (13) via a communication network (3) and forward a TC connection to the mobile radio terminal (1) via the communication network (3).

15. The mobile radio gateway according to any of claims 12 to 14, **characterized in that** the mobile radio gateway (4) is formed such that at least some of the functions of the mobile radio gateway (4) are controlled via a SIM server (8), in particular the mobile radio gateway (4) receives the data of a partner SIM card relevant for an authentification from a SIM server (8), wherein the partner SIM card is arranged in the SIM server (8).

## Revendications

1. Procédé de transmission de liaisons de télécommunication, liaisons TC, à un terminal de téléphonie mobile (1), qui ne se trouve pas dans la zone de réception de son réseau de rattachement (7), dans lequel le terminal de téléphonie mobile (1) comprend une carte SIM (2), correspondant au réseau de rattachement (7), avec des données d'informations SIM (15), un premier numéro d'appel étant attribué à la carte SIM (2), et dans lequel le procédé comprend les étapes suivantes :
- génération automatique déclenchée par un évènement, d'un message (13) qui comprend au moins les données d'informations SIM (15) de la carte SIM (2) ou une information qui identifie la carte SIM, dans le terminal de téléphonie mobile (1) ou d'un appareil (51, 52) attribué à celui-ci;
- envoi du message (13) du terminal de téléphonie mobile (1) ou de l'appareil (51, 52) relié au terminal de téléphonie mobile (1), directement ou indirectement, à une passerelle de téléphonie mobile (4) ;
- mise à disposition d'informations d'allocation (14) sur la passerelle de téléphonie mobile (4), qui identifient l'expéditeur du message (13) ;
- après la réception du message (13) sur la passerelle de téléphonie mobile (4), enregistrement d'un module de la passerelle de téléphonie mobile (4) à l'emplacement de la passerelle de téléphonie mobile (4) dans le réseau de rattachement (7) à l'aide des données d'informations SIM (15) obtenues ou à l'aide d'une carte SIM partenaire, de façon à ce que chaque liaison TC adressée au premier numéro d'appel soit transmis à la passerelle de téléphonie mobile (4) ; et
- transmission de cette liaison TC de la passerelle de téléphonie mobile (4) à l'expéditeur (1, 51, 52) à l'aide des informations d'allocation (14).

2. Procédé selon la revendication 1, **caractérisé en ce que**, en outre, chaque liaison TC provenant du terminal de téléphonie mobile (1), est d'abord transmise à la passerelle de téléphonie mobile (4) et envoyée depuis celle-ci via le réseau de rattachement (7).

3. Procédé selon la revendication 1 ou 2, **caractérisé en ce que** l'envoi du message (13), par le terminal de téléphonie mobile (1) ou un appareil relié au terminal de téléphonie mobile (1), à la passerelle de téléphonie mobile (4) ainsi qu'une transmission d'une liaison TC entre le terminal de téléphonie mobile (1) et la passerelle de téléphonie mobile (4) ont lieu par l'intermédiaire d'au moins un réseau de communication (3).

4. Procédé selon l'une des revendications précédentes, **caractérisé en ce que** l'événement qui génère le message (13) :
- est une constatation, dans le terminal de téléphonie mobile (1) ou l'appareil (51, 52) relié au terminal de téléphonie mobile (1) :
- qu'un réseau de téléphonie mobile étranger se trouve à l'emplacement actuel du terminal de téléphonie mobile (1), et/ou
- qu'un réseau de téléphonie mobile alternatif au réseau de rattachement (7) se trouve à l'emplacement actuel du terminal de téléphonie mobile (1), et/ou
- qu'aucun réseau ou qu'aucun réseau souhaité de téléphonie mobile ne se trouve à l'emplacement actuel du terminal de téléphonie mobile (1), ou
- est une entrée, définie manuellement, d'un utilisateur du terminal de téléphonie mobile (1).

5. Procédé selon l'une des revendications précédentes, **caractérisé en ce que** le message (13) est généré par un logiciel du terminal de téléphonie mobile (1).

6. Procédé selon l'une des revendications précédentes, **caractérisé en ce que** les données d'informations SIM (15) sont transmises par le terminal de téléphonie mobile (1) par l'intermédiaire de la fonction SIM Access Profile et une transmission radio vers l'appareil (51, 52) relié au terminal de téléphonie mobile (1), qui envoie le message (13) à son tour.

7. Procédé selon l'une des revendications précédentes, **caractérisé en ce que** le message (13) généré automatiquement dans le terminal de téléphonie mobile (1) contient déjà les informations d'allocation (14) permettant l'identification de l'expéditeur (1, 51, 52) du message (13) sur la passerelle de téléphonie mobile (4).

8. Procédé selon l'une des revendications précédentes, **caractérisé en ce que** les informations d'allocation (14) sont mises à disposition automatiquement, par exemple grâce à un enregistrement VoIP, sur la passerelle de téléphonie mobile (4).

9. Procédé selon l'une quelconque des revendications 1 à 8, **caractérisé en ce que** le message généré (13) est envoyé par l'intermédiaire d'un serveur SIM (8) à la passerelle de téléphonie mobile (4).

10. Procédé selon l'une des revendications précédentes, **caractérisé en ce que** l'information qui identifie la carte SIM est utilisée pour enregistrer, dans la passerelle de téléphonie mobile, une carte SIM partenaire de la carte SIM.

11. Procédé selon l'une des revendications précédentes, **caractérisé en ce que** la carte SIM partenaire se trouve dans un serveur SIM (8) et les données de la carte SIM partenaire importantes pour une authentification sont transmises à la passerelle de téléphonie mobile (4) lorsque le message (13) généré entre dans la passerelle de téléphonie mobile (4) et/ou dans le serveur SIM (8).

12. Passerelle de téléphonie mobile qui comprend :
- une pluralité de modules radio pour la communication par téléphonie mobile, une pluralité de cartes SIM (2, 9) étant allouées ou pouvant être allouées à la passerelle de téléphonie mobile (4), celles-ci permettant une utilisation d'un module radio pour la communication par téléphonie mobile,
- des moyens aptes à détecter un message (13) envoyé directement ou indirectement par un terminal de téléphonie mobile (1) ou un appareil (51, 52) relié au terminal de téléphonie mobile (1) à la passerelle de téléphonie mobile (4), qui comprend les données d'informations SIM (15) d'une carte SIM (2) du terminal de téléphonie mobile (1), ou qui identifie la carte SIM, un premier numéro d'appel étant alloué à la carte SIM (2),
- un module qui, après la réception du message (13) s'enregistre à l'emplacement de la passerelle de téléphonie mobile (4) dans le réseau de rattachement (7) du terminal de téléphonie mobile (1) à l'aide des données d'informations SIM (15) obtenues ou à l'aide d'une carte SIM partenaire, de façon à ce que chaque liaison de télécommunication, liaison TC, adressée au premier numéro d'appel soit transmise à la passerelle de téléphonie mobile (4),
- des moyens permettant de détecter et/ou de générer les informations d'allocation (14) pour l'identification de l'expéditeur (1, 51, 52) du message (13), et
- des moyens permettant de transmettre une liaison TC adressée au premier numéro d'appel du terminal de téléphonie mobile (1) et transmise à la passerelle de téléphonie mobile (4) à l'expéditeur (1, 51, 52) du message (13) à l'aide des informations d'allocation (14).

13. Passerelle de téléphonie mobile selon la revendication 12, **caractérisée en ce que** la passerelle de téléphonie mobile (4) est conçue, en outre, pour recevoir chaque liaison TC provenant du terminal de téléphonie mobile (1) par l'intermédiaire d'un réseau de communication (3) et pour l'envoyer par l'intermédiaire du réseau de rattachement (7) au destinataire (6) de la liaison TC.

14. Passerelle de téléphonie mobile selon la revendication 12 ou 13, **caractérisée en ce que** la passerelle de téléphonie mobile (4) est conçue pour recevoir le message (13) par l'intermédiaire d'un réseau de communication (3) et de transmettre une liaison TC par l'intermédiaire du réseau de communication (3) au terminal de téléphonie mobile (1).

15. Passerelle de téléphonie mobile selon l'une des revendications 12 à 14, **caractérisée en ce que** la passerelle de téléphonie mobile (4) est conçue de façon à ce qu'au moins certaines des fonctions de la passerelle de téléphonie mobile (4) soient contrôlées par l'intermédiaire d'un serveur SIM (8), plus particulièrement la passerelle de téléphonie mobile (4) obtient d'un serveur SIM (8) les données d'une carte SIM partenaire importantes pour une authentification, la carte SIM partenaire se trouvant dans le serveur SIM (8).
